# EUROPEAN PATENT APPLICATION

(11) **EP 4 807 539 A1**
(43) Date of publication of application: **16.09.2026**
(21) Application number: 25220946.5
(22) Date of filing: 04.12.2025
(51) Int. Cl.: G06F 9/30

(54) **APPARATUS AND METHODS FOR DATA LOAD AND STORE OPERATIONS**

(30) Priority: 06.12.2024 GB 202417912
(71) Applicant: Codasip s.r.o, 602 00 Brno (CZ)
(72) Inventor: Wise, Adrian, 602 00 Brno (CZ)
(74) Representative: Beck Greener LLP

(57) **Abstract**

The present invention provides apparatus and methos for data load and data store operation, the apparatus comprising logic circuitry and a segment buffer communicatively coupled to the logic circuitry.

## Description

The present invention relates to data load and data store operations. In embodiments, the present invention relates to apparatus and methods for data load and store operations. In particular, the present invention relates to load and store operations for a vector processor.

In computing, data is typically stored in data storage devices, such as dynamic or static RAM (random access memory) or any other suitable memory device known to the skilled person. In a load operation, to prepare data for processing, data stored in a data storage device is retrieved and loaded to processor registers, which typically comprises fast storage, for a computer processor to access. Conversely, in a store operation, to prepare for writing data back into the data storage device, data is retrieved from the computer processor and loaded on to the processor registers in readiness for writing to the data storage devices.

According to the first aspect of the present invention, there is provided a method for a data load operation for writing data to one or more processor registers via a segment buffer, the data comprising a plurality of data segments, each data segment comprising one or more data elements, each data element comprising one or more data bytes, the segment buffer comprising a plurality of data registers, each data register comprising one or more byte files, the byte files being arranged into one or more rows, the or each row comprising one byte file from each data register and defining a segment buffer width, the method comprising receiving instructions for a data load operation, the instructions defining a number of fields in each segment and an element size; receiving data bytes of data retrieved from a data storage device based on the received instructions; determining, for each row of byte files of the segment buffer, based on the segment buffer width, the number of fields, and the element size, a skew that is indicative of an amount by which data bytes to be written to the row in the segment buffer is to be rotated; applying the determined skew to the received data bytes for writing to the segment buffer such that data bytes of data elements of the same field are written to respectively different data registers; writing to the segment buffer, row-wise and row-by-row, based on the received instructions and with the applied skew, each received data byte to a byte file of one of the plurality of data registers of the segment buffer; determining a mapping indicative of, for a byte file in the one or more processor registers, a byte file in the segment buffer from which a data byte in said byte file is to be read and written to said byte file of the one or more processor registers; and applying the determined skew to the determined mapping.

In embodiments, the method further comprises writing to the segment buffer each received data byte comprises writing data bytes of data elements of the same field to a respectively different one of the plurality of data registers so as to enable data bytes of data elements of the same field to be read from the segment buffer by reading one byte file of each of the plurality of data registers.

In embodiments, the method further comprises aligning the received data bytes to write to the data bytes to the segment buffer contiguously.

In embodiments, the method further comprises reading, from the plurality of data registers of the segment buffer, data bytes of data elements of the same field; and writing the read data bytes of data elements of the same field to the one or more processor registers based on the determined mapping with the determined skew applied.

According to another aspect of the present invention, there is provided a method for a data store operation for writing data to a data storage device via a segment buffer, the data comprising a plurality of data segments, each data segment comprising one or more data elements, each data element comprising one or more data bytes, the segment buffer comprising a plurality of data registers, each data register comprising one or more byte files, the byte files being arranged into one or more rows, the or each row comprising one byte file from each data register and defining a segment buffer width, the method comprising receiving instructions for a data store operation, the instructions defining a number of fields in each segment and an element size; determining a mapping indicative of, for a byte file in one or more processor registers from which a data byte in said byte file is to be read and written to the segment buffer, a byte file in the segment buffer to which to write said data byte; determineng, for each row of byte files of the segment buffer, based on the segment buffer width, the number of fields, and the element size, a skew that is indicative of an amount by which data bytes to be written to the row in the segment buffer is to be rotated; applying the determined skew to the determined mapping; receiving data bytes of data retrieved from the one or more processor registers based on the received instructions; and writing to the segment buffer, based on the received instructions and on the determined mapping with the determined skew applied, each received data byte to a byte file of one of the plurality of data registers of the segment buffer.

**In** embodiments, the method further comprises reading data bytes from the plurality of data registers of the segment buffer; applying the determined skew to the read data bytes; and writing the read data bytes with the applied skew to the data storage device.

**In** embodiments, the method further comprises aligning the data bytes read from the segment buffer to write to the data storage device contiguously.

**In** embodiments, determining a skew includes determining a repeat according to the following equation: $Repeat = \frac{Element Size \times nfields}{gcd \left(\left(Element Size\times nfields\right),Segment Buffer Width\right)}$ wherein gcd denotes the greatest common divisor function, Element Size denotes the number of data bytes in a data element, nfields denotes the number of fields in each data segment, and Segment Buffer Width denotes the number of data bytes that can be written to a row of byte files of the segment buffer; and determining the skew according to the following equation: $Skew = Element Size \times mod \left(floor\left(\frac{Index}{Repeat}\right),\frac{nfields}{Repeat}\right)$ wherein mod denotes the modulo function, floor denotes the floor function, and Index denotes a row number in the segment buffer.

In embodiments, the processor register is a vector processor register; and/or each data register includes 2^{x} number of byte files, where x is an integer greater than or equal to 1; and/or each data byte comprises eight bits of data.

According to yet another aspect of the present invention, there is provided an apparatus for a data load operation for writing data to one or more processor registers via a segment buffer, the data comprising a plurality of data segments, each data segment comprising one or more data elements, each data element comprising one or more data bytes, comprising logic circuitry configured to receive data bytes of data retrieved from a data storage device based on received instructions, the instructions defining a number of fields in each segment and an element size; and a segment buffer comprising a plurality of data registers, each data register comprising one or more byte files, the byte files being arranged into one or more rows, the or each row comprising one byte file from each data register and defining a segment buffer width; wherein the logic circuitry is configured to determine, for each row of byte files of the segment buffer, based on the segment buffer width, the number of fields, and the element size, a skew that is indicative of an amount by which data bytes to be written to the row in the segment buffer is to be rotated; apply the determined skew to the received data bytes for writing to the segment buffer such that data bytes of data elements of the same field are written to respectively different data registers; write to the segment buffer, row-wise and row-by-row, based on the received instructions and with the applied skew, each received data byte to a byte file of one of the plurality of data registers of the segment buffer; determine a mapping indicative of, for a byte file in the one or more processor registers, a byte file in the segment buffer from which a data byte in said byte file is to be read and written to said byte file of the one or more processor registers; and apply the determined skew to the determined mapping.

In embodiments, the logic circuitry is further configured to read, from the plurality of data registers of the segment buffer, the one or more data bytes of data elements of the same field; and write the read data bytes of the data elements of the same field to the one or more processor registers based on the determined mapping with the determined skew applied.

In embodiments, the logic circuitry includes a barrel shifter configured to write the received data bytes with the applied skew to the segment buffer.

In embodiments, the logic circuitry includes a cross bar switch configured to write the received data bytes with the applied skew to the segment buffer.

In embodiments, the logic circuitry includes a cross bar switch configured to write the one or more read data bytes of data elements of the same field to the one or more processor registers based on the determined mapping with the determined skew applied.

In embodiments, the cross bar switch is further configured to write the one or more read data bytes of data elements of the same field to the one or more processor registers based on the determined mapping with the determined skew applied.

In embodiments, the logic circuitry is configured to align the received data bytes to write to the data bytes to the segment buffer contiguously.

According to yet another aspect of the present invention, there is provided an apparatus for a data store operation for writing data to a data storage device via a segment buffer, the data comprising a plurality of data segments, each data segment comprising one or more data elements, each data element comprising one or more data bytes, comprising logic circuitry configured to receive data bytes of data retrieved from one or more processor registers based on received instructions, the instructions defining a number of fields in each segment and an element size; and a segment buffer comprising a plurality of data registers, each data register comprising one or more byte files, the byte files being arranged into one or more rows, the or each row comprising one byte file from each data register and defining a segment buffer width; wherein the logic circuitry is configured to determine a mapping indicative of, for a byte file in one or more processor registers from which a data byte in said byte file is to be read and written to the segment buffer, a byte file in the segment buffer to which to write said data byte; determine, for each row of byte files of the segment buffer, based on the segment buffer width, the number of fields, and the element size, a skew that is indicative of an amount by which data bytes to be written to the row in the segment buffer is to be rotated; apply the determined skew to the determined mapping; and write to the segment buffer, based on the received instructions and the determined mapping with the determined skew applied, each received data byte to a byte file of one of the plurality of data registers of the segment buffer.

In embodiments, the logic circuitry is further configured to read data bytes from the plurality of data registers of the segment buffer; apply the determined skew to the read data bytes; and write the read data bytes with the applied skew to the data storage device.

In embodiments, the logic circuitry includes a cross bar switch, configured to receive the data bytes of the retrieved data; and write the received data bytes to the segment buffer based on the determined mapping with the determined skew applied.

**In** embodiments, the cross bar switch is further configured to receive the read data bytes; and write the read data bytes with the applied skew to the data storage device.

**In** embodiments, the logic circuitry includes a barrel shifter configured to receive the read data bytes; and write the read data bytes with the applied skew to the data storage device.

**In** embodiments, the logic circuitry is configured to align the read data bytes to write the read data bytes to the data storage device contiguously.

**In** embodiments, the logic circuitry is configured to determine the skew by determining a repeat according to the following equation: $Repeat = \frac{Element Size \times nfields}{gcd \left(\left(Element Size\times nfields\right),Segment Buffer Width\right)}$ wherein gcd denotes the greatest common divisor function, Element Size denotes the number of data bytes in a data element, nfields denotes the number of fields in each data segment, and Segment Buffer Width denotes the number of data bytes that can be written to a row of byte files of the segment buffer; and determining the skew according to the following equation: $Skew = Element Size \times mod \left(floor\left(\frac{Index}{Repeat}\right),\frac{nfields}{Repeat}\right)$ wherein mod denotes the modulo function, floor denotes the floor function, and Index denotes a row number in the segment buffer.

The present invention therefore provides an apparatus and method by which data bytes may be arranged in a segment buffer for a data load operation in a way that enables data bytes of the same field to be read out within the same cycle. This then enables these data bytes, of the same field, to be read out of the segment buffer for loading to processor registers within the same cycle for processing. The present invention also provides an apparatus and method by which data bytes of sequential order retrieved from data registers of a processor may be written to a segment buffer in a way that enables those data bytes to be read out of the segment buffer within the same cycle for writing to a data storage device. With these arrangements, only one write port and one read port per register file are required, and only one data byte is required to be read out of or written to a given register file of the segment buffer each cycle.

Embodiments of the present invention will hereinafter be described by way of examples, with references to the accompanying drawings, in which:
Figure 1 is a schematic illustration of an apparatus for a data load and/or data store operation;
Figure 2 is a schematic illustration of a segment buffer;
Figure 3 is a diagram illustrating a method for a data load operation;
Figure 4 is a diagram illustrating the construction of a mapping for a data load operation;
Figure 5 is a diagram illustrating a method for a data store operation; and

Tables 1 to 9 show representations of data bytes in a segment buffer, processor registers, and a data storage device.

The present invention generally relates to methods and apparatus for data load and data store operations. In various embodiments, the present invention provides an apparatus for data load operations for writing data to data registers of a processor via a segment buffer. The apparatus includes a segment buffer and logic circuitry. The logic circuitry is configured to receive data retrieved from a data storage device and to write the retrieved data to the segment buffer, in readiness to be read out of the segment buffer and written to data registers of a processor. In various embodiments, the present invention also provides an apparatus for data store operations for writing data retrieved from data registers of a processor to a data storage device via a segment buffer. The apparatus includes a segment buffer and logic circuitry. The logic circuitry is configured to receive data returned from data registers of a processor and to write the returned data to the segment buffer, in readiness to be read out of the segment buffer and written to the data storage device. When assembled, the apparatus forms part of a computer processor.

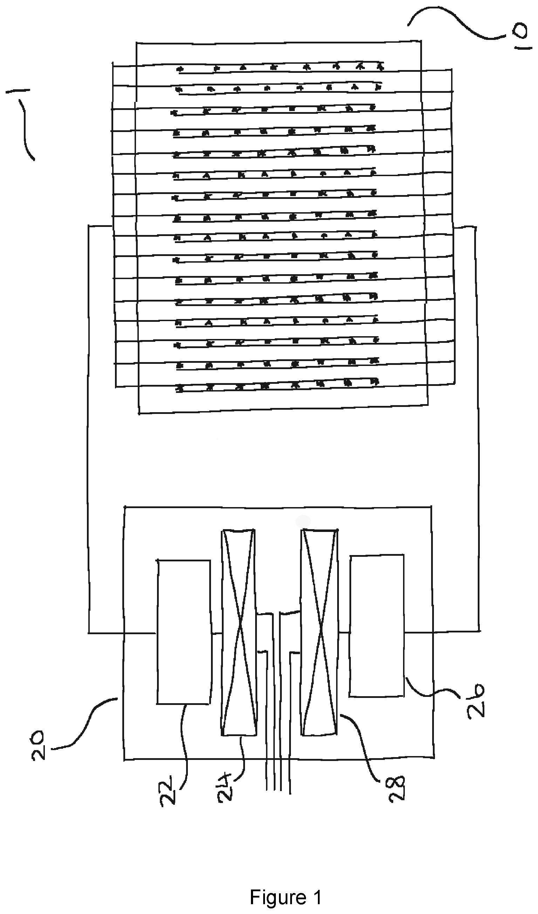

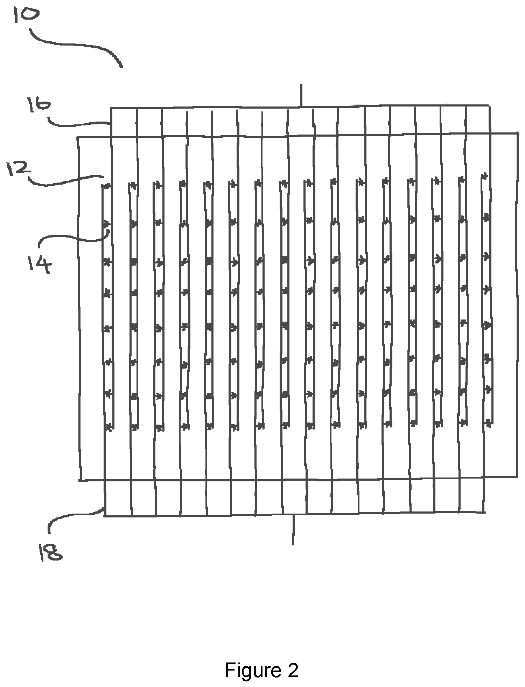

Referring to Figure 1, an apparatus 1 in accordance with various embodiments is shown. The apparatus 1 includes a segment buffer 10 and logic circuitry 20 communicatively coupled to the segment buffer 10. In various embodiments, shown in more detail in Figure 2, the segment buffer 10 includes a plurality of data registers 12 and each data register 12, which may also be referred to as a "byte lane", has at least one byte file 14. In particular embodiments such as that exemplified in Figure 2, the segment buffer 10 has sixteen data registers 12 and each data register 12 has eight byte files 14, making a sixteen-by-eight array of byte files 14. With each byte file 14 being eight bits in size, the segment buffer 10 shown in Figure 2 is effectively eight rows of byte files 14, each row being 128 bits wide and comprising one byte file 14 from each of the sixteen data registers 12. The number of byte files 14 in a row also defines the segment buffer width. In other words, the segment buffer 10 of the embodiments shown in Figure 1 has a segment buffer width of 16 bytes, or 128 bits.

As shown in Figure 2, the segment buffer 10 has sixteen data registers 12. It will however be appreciated that the segment buffer 10 may have any suitable number of data registers 12 and each data register 12 may have any suitable number of byte files 14. In particular, it will be appreciated that each data register 12 may have 2^{x} data bytes, where x is any suitable integer equal to or greater than one. It will also be appreciated that each byte file 14 may be of any suitable size other than eight bits.

In the segment buffer 10 of the embodiment shown in Figure 2, each data register 12 has one write port 16, configured to write data bytes to any one of the byte files 14 of that data register 12 in a given clock cycle. Each data register 12 also has one read port 18, configured to read the data byte from any one of the byte files 14 of that data register 12 in a given clock cycle. In other words, the segment buffer 10 shown in Figure 2 can be written to at a rate of one 128-bit (i.e. 16-byte) word per cycle or read from at a rate of one 128-bit (i.e. 16-byte) word per cycle. In particular embodiments, the segment buffer 10 is configured such that data is only written to the data registers 12 in a given cycle or only read from the data registers 12 in a given clock cycle, i.e. not written to and read from at the same time.

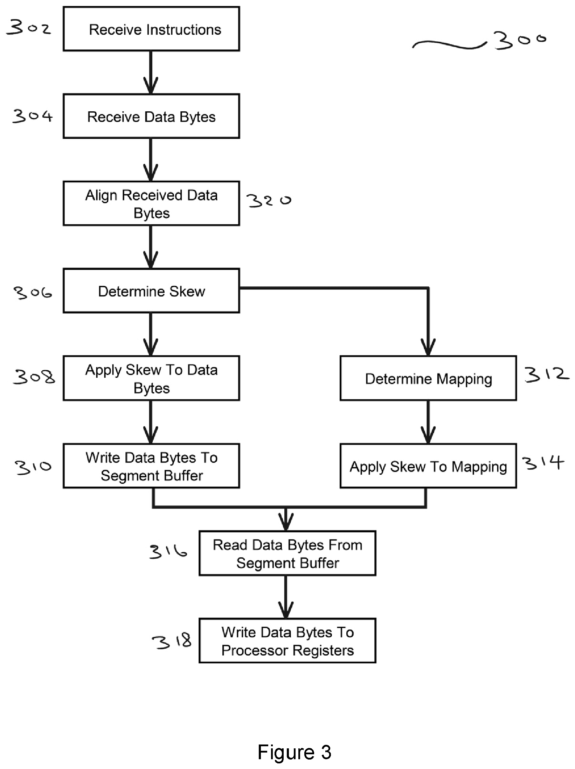

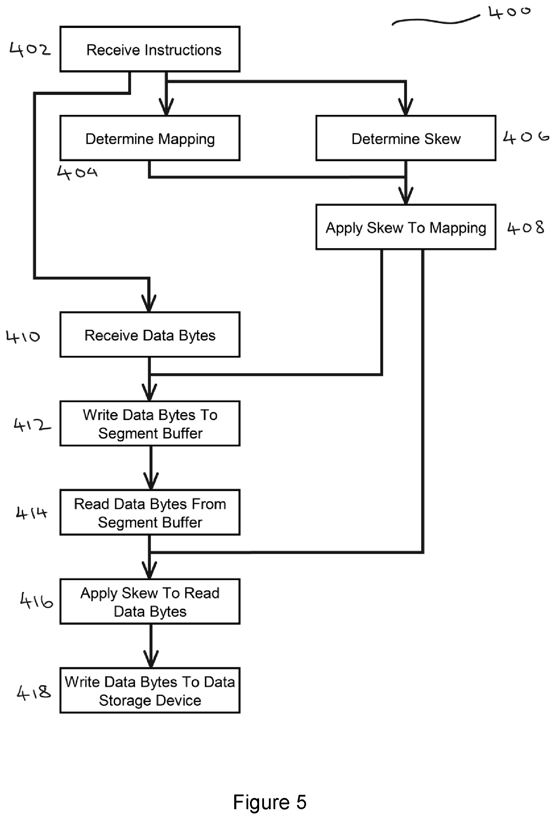

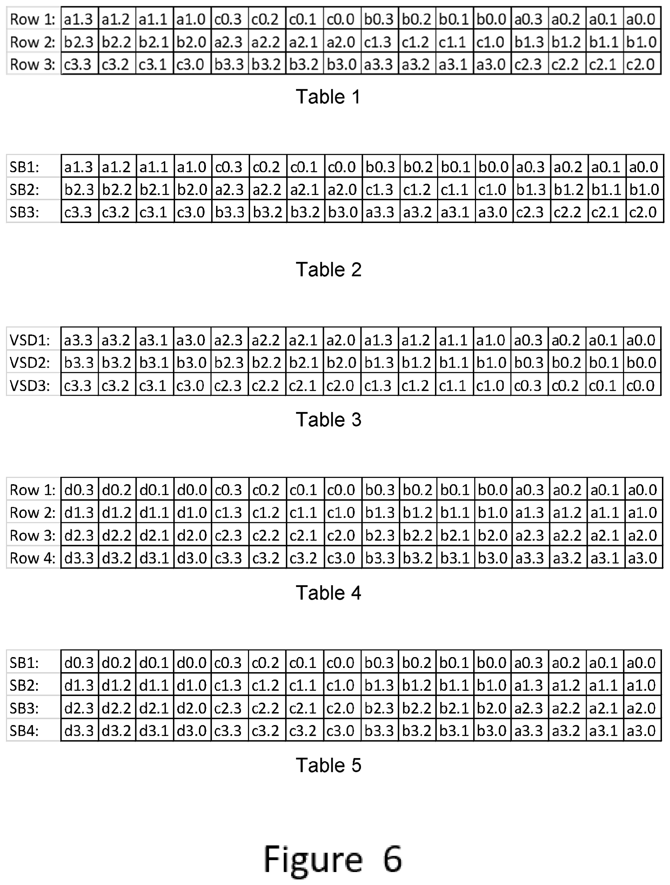

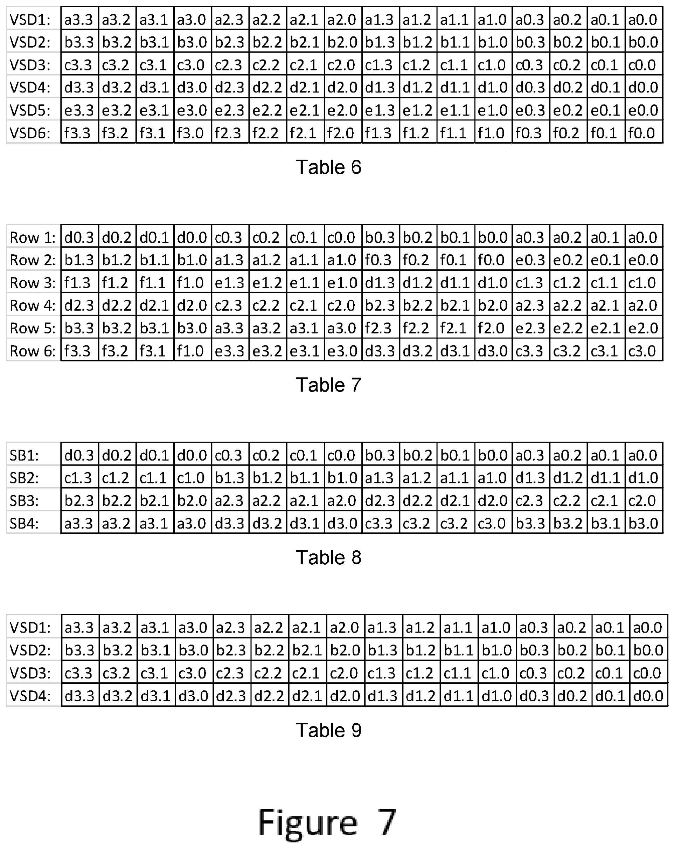

Referring back to Figure 1 and also referring to Figure 2, the logic circuitry 20 that is communicatively coupled to the segment buffer 10 feeds data into and reads data out of the segment buffer 10 via the write port 16 and the read port 18 of the segment buffer 10. When the apparatus 1 is assembled into a computer processor and the computer processor into a computer system, the logic circuitry 20 is also communicatively coupled to a data storage device. As will be described in more detail hereinbelow with reference to Figures 3 and 5, in a load operation, or a store operation, instructions are received by the apparatus 1, the instructions being a command to the apparatus 1 to perform a load operation or a store operation. The instructions include information defining parameters of the load or store operation. In particular, for a segment load operation, and similarly for a segment store operation, in which data is organized into a plurality of data segments, each data segment comprising one or more data elements, and each data element comprising one or more data bytes, the instructions include information defining various parameters, including a parameter that indicates the number of fields, nfields, in each data segment and a parameter that indicates the size in bytes of each data element. Correspondingly, data bytes are typically labelled in order to distinguish data bytes of different data elements and data elements of different fields. For example, following one labelling convention, and as used hereinbelow, data bytes may be labelled in the form "xn.m", where "x" is a lower case letter that denotes the field to which a data bytes of a data element belong, "n" is the element number and is a number counting from zero that indicates the element to which a data byte belongs, and "m" is a number counting from zero that distinguishes the data bytes within an element. It will however be appreciated that other labelling conventions may also be used. It will also be appreciated that data bytes may be labelled as big-endian or as little-endian. In the present disclosure, the right-to-left convention for referring to the ordering of data bytes is adopted.

In the context of data load operations, data is typically stored in a data storage device in sequential order, with data elements arranged in order according to the element number (i.e. data elements with the lowest element number first, followed by data elements with the next lowest element number, and so on), data elements of the same element number arranged in order according to the field, and data bytes of a data element arranged according to the significance of the data bytes. For example, Table 1 shows conceptually data segments with three fields - "a", "b", and "c", i.e. nfields = 3, each field having four elements, and each element of a field having four 8-bit data bytes, stored in the first three rows of a data storage device that is 128 bits (or 16 bytes) wide, i.e. segment buffer width = 16 bytes. As shown in Table 1, data bytes are stored row-wise in order from right to left. Acting on the received instructions for a load operation, the logic circuitry 20 retrieves data from the data storage device in the same order, either directly, or more commonly via intermediate components such as a storage buffer. The logic circuitry 20 then feeds the retrieved data into the segment buffer 10. Typically, data retrieved from the data storage device is written to the segment buffer 10 row-wise and row-by-bow. For the example of data arranged in a data storage device in the order as shown in Table 1, the retrieved data would be written to the segment buffer 10 in the same order. This is illustrated in Table 2, which shows three rows (SB1, SB2, and SB3) of a segment buffer 10.

Some data processing tasks require data bytes to be processed in order of the respective fields of the data elements. That is to say, some tasks require all the "a" elements to be processed first, followed by all the "b" elements, followed by all the "c" elements. For example, in digital image processing, all the "a" elements may contain data in the red colour channel, all the "b" elements may contain data in the green colour channel, all the "c" elements may contain data in the blue colour channel, and each colour channel needs to be processed separately. This then requires all the data bytes of the "a" elements of the data segments to be loaded together to the data registers of the processor first, followed by all the "b" elements together, followed by all the "c" elements together. For the example of data bytes in the segment buffer 10 as shown in Table 2, all the of data bytes of the "a" elements are written to respectively different data registers 12 in the segment buffer 10. Therefore, only one read port 18 per data register 12 is required in order to read out all of the data bytes of the "a" elements in one clock cycle of the processor. Similarly, all of the data bytes of the "b" elements can be read in one clock cycle and all of the data bytes of the "c" elements can be read in another clock cycle with only one read port 18 per data register 12. Then, reordering the read data bytes if necessary (for example reordering the data bytes read out of the "SB1" row of the segment buffer 10 into the sequence of a0.m, a1.m, a2.m, a3.m, etc.), the logic circuitry 20 feeds the read data bytes to data registers of the processor for loading on to the processor for processing. Table 3 shows an illustration of the order of the data bytes once written to the data registers of the processor.

A problem arises, however, for certain values of nfields. For example, for data segments with four fields - "a", "b", "c", and "d", i.e. nfields = 4, data bytes stored in a data storage device in a sequential and contiguous manner would be stored in the arrangement shown in Table 4. When read from the data storage device and fed to the segment buffer 10, the arrangement of data bytes in the segment buffer 10 would be as shown in Table 5, i.e. in the same arrangement as they were in the data storage device as shown in Table 4. In the arrangement of Table 5, data bytes of the same field are not all written to respectively different data registers 12. For example, as shown in Table 5, data bytes a0.0, a1.0, a2.0, and a3.0 are written to the same data register 12. In a segment buffer 10 in which each data register 12 has only one read port 18, it would not be possible to read these data bytes at the same time within the same clock cycle. It would require four separate read-out cycles to read out these data bytes. To read these data bytes within the same clock cycle would require an individual read port at each byte file 14. Having individual read ports at each byte file 14 of a data register 12 would make the design of the segment buffer 10 much more complex and much more expensive to construct.

In the context of data store operations, data is typically loaded on to data registers of a processor in sequential order, with data elements arranged in order according to the field, data elements of the same field arranged in order according to the element number, and data bytes of a data element arranged according to the significance of the data bytes. Data bytes need to be stored in the data storage device in sequential order, first according to the significance of the data bytes within an element, then according to the significance of the respective fields of the elements, then according to the element number. In an example corresponding to the example above in which a data segment has three fields - "a", "b", and "c", i.e. nfields = 3, each field having four elements, and each element of a field having four 8-bit data bytes, data bytes would be loaded in the registers of the processor in the order shown in Table 3 and need to be stored in the data storage device in the order shown in Table 1. As shown in Table 3, all the "a" elements are loaded sequentially in the first row, all the "b" elements are loaded sequentially in the second row, and all the "c" elements are loaded sequentially in the third row. Acting on the received instructions for a store operation, the logic circuitry 20 retrieves data from the registers of the processor, writes the retrieved data to the segment buffer 10, reads data bytes from the segment buffer 10, and writes the data bytes to the data storage device. Because data bytes of the same field are destined for respectively different "columns" in the data storage device, once data bytes of the same field are retrieved from the data registers of the processor, they may be written to respectively different data registers 12 in the segment buffer 10 without any complicated reordering and still enable the required data bytes for writing to the data storage device to be read out of the segment buffer 10 in the required order in each clock cycle.

However, for certain values of nfields, a similar problem arises in that simply writing data bytes into the segment buffer 10 in the order in which they are retrieved from the data registers of the processor would not enable the required data bytes for writing to the data storage device to be read out of the segment buffer 10 together within a single clock cycle. For example, for nfields = 6, for which data bytes would be loaded to data registers of a processor in the order as shown in Table 6 and the order in which data bytes are to be stored in the data storage device is shown in Table 7, data bytes of the same field are not necessarily destined to be stored in the data storage device in respectively different "columns". For example, Table 7 shows that data bytes a0.0, b0.0, c0.0, and d0.0 are destined for the first row, labelled "Row 1", in the data storage device. However, Table 6 shows that these data bytes are in the same "column". Writing data bytes into the segment buffer 10 in the order shown in Table 6 would mean that these data bytes would be written to the same data register 12 in the segment buffer 10, which would then require a read port at each byte file 14 of that data registers 12 in order to read the data bytes together within one clock cycle for writing to the data storage device.

Figure 3 shows a method 300 according to various embodiments of the present invention for a data load operation. The method begins, at step 302, with instructions being received to instruct the apparatus 1 to perform a data load operation. The instructions may be in any suitable form and define various parameters for the data load operation, including the number of fields, nfields, in each data segment and information defining the size in bytes of each data element in each data segment. Typically, data is stored in a data storage device that is communicatively coupled to the apparatus 1 when the apparatus 1 is assembled into a computer system, and is retrieved from the data storage device and delivered to the apparatus 1 for a data load operation. In step 304, based on the received instructions, data bytes of data retrieved from the data storage device are received by the apparatus 1, directly from the data storage device or via intermediate components such as a memory buffer, in readiness for writing to the segment buffer 10.

As explained hereinabove, problem arises when simply writing the received data bytes into the segment buffer 10. In embodiments of the method 300 shown in Figure 3, the received data bytes are manipulated, as will be explained, before writing to the segment buffer 10. In embodiments, at step 306, the method 300 determines a skew that is to be applied to the received data bytes before the received data bytes are written to the segment buffer 10.

Data, as mentioned hereinabove, is typically received from the data storage device one word per clock cycle. In embodiments, such as those illustrated hereinabove, in which the data storage device has a width of 128 bits and the segment buffer width is also 128 bits, one 128-bit word is retrieved from the data storage device in each clock cycle. In the example shown in Table 4, the data bytes of the first word of data retrieved from the data storage device would be in the order - a0.m, b0.m, c0.m, d0.m, and the data bytes of the second word of data would be in the order - a1.m, b1.m, c1.m, d1.m, and so on. A skew is a quantity that indicates the number of bytes by which the order of the data bytes in each retrieved word is rotated. In particular embodiments, the skew to be applied to each word of retrieved data is calculated from Equation 1 and Equation 2. $Repeat = \frac{Element Size \times nfields}{gcd \left(\left(Element Size\times nfields\right),Segment Buffer Width\right)}$ $Skew = Element Size \times mod \left(floor\left(\frac{Index}{Repeat}\right),\frac{nfields}{Repeat}\right)$

From Equation 1 and Equation 2, the skew that is to be applied to each word of data retrieved from the data storage device is calculated in two steps. In Equation 1, "Element Size" is the size, in bytes, of each data element, "nfields" is the number of fields in each data segment, "Segment Buffer Width" is the number of byte files 14 in each row of the segment buffer 10, and "gcd" denotes the greatest common divisor function. In Equation 2, "Index" is the number of the row in the segment buffer 10 into which the received word of data is to be written (e.g. Index = 0 for the first received word, Index = 1 for the second received word, etc.), "floor(x,1)" denotes a function rounding x to the nearest whole number smaller than or equal to x, and "mod" denotes the modulo function. In the example of Table 4, Element Size = 4 bytes, nfields = 4, and Segment Buffer Width = 16 bytes. With these parameters, Equation 1 and Equation 2 give a skew of 0 bytes for the first word, 4 bytes for the second word, 8 bytes for the third word, and 12 bytes for the fourth word.

In step 308, the determined skew is applied to the data bytes of the corresponding received word of data. Then, based on the received instructions and with the corresponding skew applied, the data bytes are written, in step 310, row-wise and row-by-row to the byte files 14 of the data registers 12 of the segment buffer 10. For a load operation, the skew is applied to each word of data to rotate the data bytes cyclically by the amount calculated from Equation 1 and Equation 2. For example, for the second word in Table 4, applying the calculated skew of 4 bytes rotates the order of the data bytes from a1.m, b1.m, c1.m, d1.m, to b1.m, c1.m, d1.m, a1.m. As shown in Table 8, after applying the skew to the order of the data bytes in Table 4 and writing the skewed data bytes to the segment buffer 10, the data bytes of all of the data elements in the "a" field (i.e. all the "a" elements) are written to respectively different data registers 12, and similarly for the data bytes of the "b" elements, "c" elements, and "d" elements. This enables the data bytes of all the data elements of the same field to be read from the segment buffer 10 within the same clock cycle as only one byte file 14 from each data register 12 needs to be read in that clock cycle.

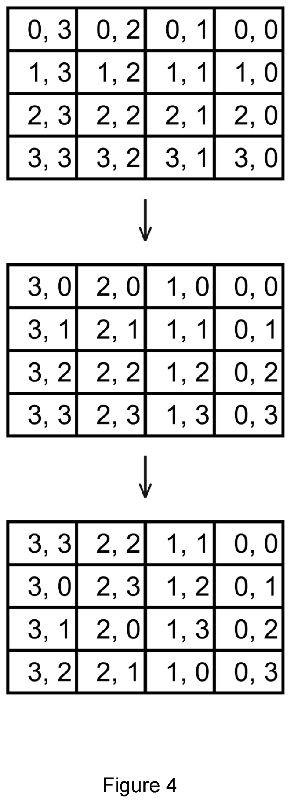

Referring still to Figure 3, after determining the skew that is to be applied to the received data bytes before they are written to the segment buffer 10, a mapping for writing data bytes read out of the segment buffer 10 to the data registers of the processor is determined in step 312. The mapping indicates to which byte file in the data registers of the processor a data byte read from a given byte file 14 in the segment buffer 10 is to be written. The mapping essentially transposes the row-wise and row-by-row order of the data bytes as arranged in the data storage device, for example as shown in Table 4, into the column-wise and column-by-column order as would be arranged in the data registers of the processor, for example as shown in Table 9. Then, at step 314, the same skew determined from Equation 1 and Equation 2 is applied to the mapping to account for the skew that is applied to the data bytes when writing the received data bytes into the segment buffer 10. Figure 4 shows an example of a way to construct the mapping and to apply the skew to the mapping according to one particular embodiment for the above example in which nfields =4.

As shown in Figure 4, the arrangement of data bytes in the data storage device is taken as the starting point and treated as a simple grid. For brevity and clarity of illustration, the data bytes of each data element are treated as a collective. Each position in the grid is given a set of coordinates - x, y, comprising a number, x, derived from the field, with a = 0, b = 1, c = 2, and d = 3, and a number, y, derived from the element number of the data element in the data storage device corresponding to that position in the grid. This grid of coordinates is then transposed to rearrange the coordinates from row-wise and row-by-row to column-wise and column-by-column. The same skew as applied to the data bytes for writing to the segment buffer 10 is then applied to the sets of coordinates in the column-wise direction. In each set of coordinates in the final grid, x identifies the data word in the segment buffer 10 and y identifies the data element of that data word (not to be confused with the element number of the data element), and maps that data element to the byte files of the data registers of the processor that correspond to the position of that set of coordinates in the final grid. In other words, for any given byte file in the data registers of the processor, the mapping, with the skew applied, indicates the byte files 14 in the segment buffer 10 from which the data bytes in those bytes file 14 are to be read and then written to those given byte files in the data registers of the processor. Effectively, the mapping, with the skew applied, indicates the destination in the data registers of the processor for data bytes of a data element after those data bytes have been read out of the segment buffer 10. Then, in some embodiments, the method 300 extends to step 316, in which data bytes of the same field are read out of the segment buffer 10 in the same clock cycle, and to step 318, in which data bytes read from the segment buffer 10 are written to the data registers of the processor following the mapping, with the skew applied.

It will be appreciated that, in some embodiments, steps 308 and 310 are performed on the received data word by word. Take the example of nfields = 4 as shown in Table 4, the first word of data from the first row of data bytes in Table 4 is received, a skew as determined from Equation 1 and Equation 2 is applied to the received data bytes, and the skewed data bytes are written to the segment buffer 10. This is then followed by the second word of data from the second row, followed by the third word, followed by the fourth word, and so on.

In Figure 3, steps 312 and 314 are shown as separate parallel steps to steps 308 and 310, etc. However, it will be appreciated that steps 312 and 314 may also be in sequence with steps 308 and 310 and the order of the steps may be interchanged. It will also be appreciated that Equation 1 and Equation 2 is one way of determining the skew needed to be applied to the data bytes before writing to the segment buffer 10, and that other ways using different equations that would arrive at the same result are equally suitable. For example, the skew may be applied in the opposite direction or as a negative quantity, provided it is applied consistently in the relevant steps.

In certain implementations of computer processors and computer systems, segmented data may be stored in data storage devices in a non-contiguous manner (not shown), in which data bytes are still stored in sequential order whilst not all are stored in physically adjacent locations in the data storage device. For example, instead of the arrangement adopted in the examples shown herein, data bytes may be stored in a data storage device in a strided arrangement, an indexed arrangement, or other arrangements known to the skilled person. In a strided arrangement, the start address of each segment of contiguous data bytes may be physically separated by a fixed separation from the start address of adjacent segments. In an indexed arrangement, each segment of contiguous data bytes may be separated from a fixed base address, with the separation between each segment and the fixed base address specified in a predefined index. In some embodiments, the method 300 for a data load operation optionally includes a step, in step 320, of aligning the data bytes received from the data storage device before writing to the segment buffer 10. To aligning the received data bytes is to append one segment of data bytes to the end of a preceding segment to remove any gaps.

Figure 5 shows a method 400 according to various embodiments of the present invention for a data store operation. The method 400 for a store operation is similar to the method 300 for a load operation, but the steps are effectively reversed. The method 400 for a data store operation begins, at step 402, with instructions being received to instruct the apparatus 1 to perform a data store operation. Similar to the method 300 for a data load operation, the instructions for a data store operation define various parameters, including a parameter indicating the number of fields, nfields, in each data segment and a parameter indicating the size in bytes of each data element in each data segment. Typically, data loaded in data registers of a processor is retrieved from and fed to the apparatus 1 for a data store operation. Table 9 shows an arrangement of data elements in data registers of a process for the example in which nfields = 4. In step 404, a mapping for writing data bytes read out of the data registers of the processor to the segment buffer 10 is determined. Similar but in the opposite sense to the mapping for a data load operation, the mapping for a data store operation indicates to which byte file 14 in the segment buffer 10 a data byte retrieved from a given byte file in the data registers of the processor is to be written. The mapping determined in step 404 essentially transposes the column-wise and column-by-column order of the data bytes as arranged in the data registers of the processor, as shown in Table 9 for example, into the row-wise and row-by-row order as would be arranged in the data storage device, as shown in Table 4. As will be appreciated by the skilled person, the mapping for a data store operation may be constructed in a way similar to the way the mapping for a data load operation is constructed as illustrated in Figure 4.

In embodiments, at step 406, the method 400 determines a skew in a similar manner as described above for a data load operation. For a data store operation, the skew is to be applied subsequently to data bytes read out of the segment buffer 10, before writing to the data storage device, and it is in the opposite sense to the skew that is applied in the method 300 for a data load operation. As will be appreciated, the skew of a data store operation may be determined with an opposite sign and applied in the same direction as the skew determined and applied in a data load operation, or it may be determined with the same sign but applied in the opposite sense as the skew in a data load operation. In other words, this step in the method 400 for a data store operation can be considered as undoing the skew applied in the data load operation. Then, in step 408, the skew determined in step in 406 is applied to the mapping determined in step 404 to account for the skew that will be applied to the data bytes when writing data bytes read out of the segment buffer 10 to the data storage device. In this step, if the skew is determined with the same sign as the skew determined in the method 300 for a data load operation, it is applied to the mapping in the opposite sense as in the method 300 for a data load operation. If the skew is determined with the opposite sign as the skew determined in the method 300 for a data load operation, then it is applied to the mapping in the same sense as in the method 300 for a data load operation. Effectively, the mapping determined for a data store operation, with the skew applied, indicates the destination in the segment buffer 10 for a data byte after that data byte has been read out of the data registers of the processor. In step 410, based on the received instructions, data bytes of data retrieved from the data registers of the processor are received by the apparatus 1, directly from the data registers of the processor or via intermediate components, in readiness for writing to the segment buffer 10. In step 412, data bytes retrieved from the data registers of the processor and received at the apparatus 1 are written to the segment buffer 10 based on the received instructions and on the determined mapping with the determined skew applied to it. In some embodiments, the method 400 extends to step 414, step 416, and step 418. In step 414, data bytes are read from the data registers 12 of the segment buffer 10. In step 416, the skew determined in step 406 is applied correspondingly to the data bytes read from the segment buffer 10 before they are written to the data storage device in step 418.

As shown in Figure 5, steps 404 and 406 are shown as in parallel. However, it will be appreciated that these steps may also be in sequence. Similarly, step 410 is shown as being in parallel with steps 404, 406, and 408. However, these steps may also be in sequence. It will also be appreciated that similar to the method 300 for a data load operation, the skew may be applied in the opposite direction or as a negative quantity, provided it is applied consistently in the relevant steps.

Referring back to Figure 1, in embodiments in which the apparatus 1 is configured for a data load operation, such as that encompassed in the method 300 shown in Figure 3, the logic circuitry 20 is configured to receive instructions for performing a data load operation. The logic circuitry 20 may be configured to be communicatively coupled to a data storage device directly or via intermediate components to the apparatus 1 when the apparatus 1 is assembled into a computer system. The logic circuitry 20 may also be configured to be communicatively coupled to data registers of a processor when it is assembled into a computer processor/system. As already explained hereinabove, the instructions contain information such as a parameter that indicates the number of fields, nfields, in each data segment and a parameter that indicates the size in bytes of each data element. The logic circuitry 20 is also configured to receive data bytes of data retrieved from a data storage device. The logic circuitry 20 is further configured to determine the skew that is required to be applied to the received data bytes as explained hereinabove, apply the determined skew to the received data bytes, and write the skewed data bytes based on the received instructions to the byte files 14 of the data registers 12 of the segment buffer 10. As explained hereinabove, the determined skew is applied to the data bytes of the corresponding received word of data and the data bytes are then written to the segment buffer 10 row-wise and row-by-row. Take the example in which nfields = 4 as shown in Table 4, the data bytes of the first word in the row labelled "Row 1" would be received from the data storage device and written, after the skew is applied, to the segment buffer 10 in the order shown in the row labelled "SB1" in Table 8. Then, data bytes of the second word in the row labelled "Row 2" in Table 4 would be received and written to the segment buffer 10 in the order as shown in the row labelled "SB2" in Table 8, and so on.

Referring still to Figure 1, the logic circuitry 20 is also configured to determining the mapping and to apply the determined skew to the mapping as described hereinabove. In some embodiments, the logic circuitry 20 is further configured to read the data bytes written to the segment buffer 10 and write the data bytes read from the segment buffer 10 to the data registers of the processor based on the determined mapping with the determined skew applied. In particular, the logic circuitry 20 reads one data byte from each data register 12 of the segment buffer 10 per clock cycle, with each data byte read in that same clock cycle being of the same field. The logic circuitry 20 then writes those data bytes read from the segment buffer 10, which would all be of the same field, following the determined mapping with the determined skew applied, to the data registers of the processor. In the example hereinabove in which nfields = 4, data bytes of data elements of the same field are written to the segment buffer 10 in respectively different data registers 12 as shown in Table 8 and may be read out of the segment buffer 10 within the same clock cycle. For example, all of the data bytes of the "a" elements may be read out of the segment buffer 10 within the same clock cycle and written to the first row labelled "VSD1" of the data registers of the processor as shown in Table 9 based on the determined mapping with the determined skew applied. Then, all the data bytes of the "b" elements may be read out of the segment buffer 10 in the next clock cycle and written to the second row labelled "VSD2" in Table 9, and so on.

Referring still to Figure 1, certain embodiments of the apparatus 1 may also be configured for a data store operation, such as that encompassed in the method 400 shown in Figure 5. In these embodiments, the logic circuitry 20 is configured to receive instructions for performing a data store operation, which similarly include information defining various parameters, including nfields and the element size. Additionally, the logic circuitry 20 is further configured to determine the mapping and the skew as described hereinabove, and to the apply the determined skew to the mapping. The logic circuitry 20 is also configured to receive data bytes retrieved from the data registers of the processor based on the received instructions and to write the received data bytes to the segment buffer 10. Take the example in which nfields = 4 as shown in Table 9, the data bytes of the first word in the row labelled "VSD1" in the data registers of the processor, which are data bytes of all the "a" elements, would be received by the logic circuitry 20 and, using the determined mapping with the determined skew applied, written to the segment buffer 10 in the arrangement as shown in Table 8. Then, data bytes of the second word in the row labelled "VSD2" in Table 9, which are data bytes of all the "b" elements, would be received and written to the segment buffer 10 in the order shown in Table 8, and so on. In certain embodiments, the logic circuitry 20 is also configured to read data bytes written to the segment buffer 10, apply the appropriate skew as described hereinabove to the read data bytes, and write the skewed data bytes to the data storage device. In particular, the logic circuitry 20 reads one data byte from each data register 12 of the segment buffer 10 per clock cycle, applies the determined skew to those read data bytes, and writes those data bytes to the data storage device. In the example hereinabove in which nfields = 4, data bytes from the row labelled "SB1" in Table 8 are read out of the segment buffer 10 within the same clock cycle. Then, the appropriate skew is applied to those data bytes (zero bytes in this case for the first word). Then, the skewed data bytes are written to the data storage device in the arrangement as shown in Table 4. In a subsequent clock cycle, data bytes from the row labelled "SB2" in Table 8 are read out of the segment buffer 10, the appreciate skew is applied to those data bytes (four bytes in this case for the second word), and the skewed data bytes are written to the data storage device in the arrangement as shown in Table 4, and so on.

In some embodiments of the apparatus 1, the logic circuitry 20 includes a barrel shifter 22, a cross bar switch 24, or a combination of both, communicatively coupled to the segment buffer 10. The barrel shifter 22, cross bar switch 24, or combination thereof is also configured to be communicatively coupled to the data storage device when the apparatus 1 is assembled into a computer system. In these embodiments, the barrel shifter 22, cross bar switch 24, or combination thereof is the part of the logic circuitry 20 that is configured to write the skewed data bytes based on the received instructions to the byte files 14 of the data registers 12 of the segment buffer 10. The barrel shifter 22, cross bar switch 24, or combination thereof may also be configured, in some embodiments, to receive data bytes read out of the segment buffer 10, apply the appropriate skew to the read data bytes, and write the skewed data bytes to the data storage device. In some embodiments of the apparatus 1, the logic circuitry 20 further includes another barrel shifter 26, another cross bar switch 28, or a combination of both, communicatively coupled to the segment buffer 10 and configured to be communicatively coupled to the data registers of the processor when the apparatus 1 is assembled into a computer system. In these embodiments, the barrel shifter 26, cross bar switch 28, or combination thereof is the part of the logic circuitry 20 that is configured to follow the determined mapping with the determined skew applied and to write the data bytes read out of the segment buffer 10 to the data registers of the processor based on the skewed mapping. The barrel shifter 26, cross bar switch 28, or combination thereof may also be configured, in some embodiments, to receive data bytes retrieved from the data registers of the processor and, based on the determined mapping with the determined skew applied, write the received data bytes to the segment buffer 10.

In some embodiments, the same barrel shifter 22, cross bar switch 24, or combination thereof may be configured to be communicatively coupled to both the data storage device and the data registers of the processor, as well as to the segment buffer 10. In these embodiments, the same barrel shifter 22, cross bar switch 24, or combination thereof may be configured, for a data load operation, to write the skewed data bytes to the segment buffer 10 as well as being configured to write the data bytes read out of the segment buffer 10 to the data registers of the processor. The same barrel shifter 22, cross bar switch 24, or combination thereof may also be configured, for a data store operation, to receive data bytes retrieved from the data registers of the processor, write the received data bytes to the segment buffer 10 based on the determined mapping with the determined skew applied, receive data bytes read out of the segment buffer 10, apply the appropriate skew to the read data bytes, and write the skewed data bytes to the data storage device. In these embodiments, only one barrel shifter 22, cross bar switch 24, or combination thereof is provided to perform the steps of a data load operation as well as the steps of a data store operation. By sharing resources in this manner, device architecture may be kept simpler and less complicated, and devices built in this manner may be easier and cheaper to produce.

The examples and embodiments disclosed herein have been described in the context of vector processors and the apparatus 1 may be configured to be implemented with or within a vector processor. However, it will be appreciated that the disclosed examples and embodiments may also be implemented with or within any other suitable forms of computer processors.

In the examples and embodiments disclosed hereinabove, the logic circuitry, barrel shifter, and cross bar switch have been described as separate hardware components. However, it will be appreciated that these components may also be implemented as an integrated component and that these components may also be implemented in software as well as hardware, or a combination thereof. Additionally, as shown in Figure 1, a barrel shifter and a cross bar switch are provided in the data path between the segment buffer 10 and the data storage device as well as in the data path between the segment buffer 10 and the processor registers. However, as already explained, it will be appreciated that various embodiments may include just a barrel shifter or just a cross bar switch, in either or both data paths.

Embodiments of the present invention have been described with particular reference to the examples illustrated. However, it will be appreciated that variations and modifications may be made to the examples described within the scope of the appending claims.

## Claims

1. A method for a data load operation for writing data to one or more processor registers via a segment buffer, the data comprising a plurality of data segments, each data segment comprising one or more data elements, each data element comprising one or more data bytes, the segment buffer comprising a plurality of data registers, each data register comprising one or more byte files, the byte files being arranged into one or more rows, the or each row comprising one byte file from each data register and defining a segment buffer width, the method comprising:
receiving instructions for a data load operation, the instructions defining a number of fields in each segment and an element size;
receiving data bytes of data retrieved from a data storage device based on the received instructions;
determining, for each row of byte files of the segment buffer, based on the segment buffer width, the number of fields, and the element size, a skew that is indicative of an amount by which data bytes to be written to the row in the segment buffer is to be rotated;
applying the determined skew to the received data bytes for writing to the segment buffer such that data bytes of data elements of the same field are written to respectively different data registers;
writing to the segment buffer, row-wise and row-by-row, based on the received instructions and with the applied skew, each received data byte to a byte file of one of the plurality of data registers of the segment buffer;
determining a mapping indicative of, for a byte file in the one or more processor registers, a byte file in the segment buffer from which a data byte in said byte file is to be read and written to said byte file of the one or more processor registers; and
applying the determined skew to the determined mapping.

2. The method of claim 1, wherein writing to the segment buffer each received data byte comprises writing data bytes of data elements of the same field to a respectively different one of the plurality of data registers so as to enable data bytes of data elements of the same field to be read from the segment buffer by reading one byte file of each of the plurality of data registers.

3. The method of claim 1 or 2, further comprising aligning the received data bytes to write to the data bytes to the segment buffer contiguously.

4. The method of any preceding claim, further comprising:
reading, from the plurality of data registers of the segment buffer, data bytes of data elements of the same field; and
writing the read data bytes of data elements of the same field to the one or more processor registers based on the determined mapping with the determined skew applied.

5. A method for a data store operation for writing data to a data storage device via a segment buffer, the data comprising a plurality of data segments, each data segment comprising one or more data elements, each data element comprising one or more data bytes, the segment buffer comprising a plurality of data registers, each data register comprising one or more byte files, the byte files being arranged into one or more rows, the or each row comprising one byte file from each data register and defining a segment buffer width, the method comprising:
receiving instructions for a data store operation, the instructions defining a number of fields in each segment and an element size;
determining a mapping indicative of, for a byte file in one or more processor registers from which a data byte in said byte file is to be read and written to the segment buffer, a byte file in the segment buffer to which to write said data byte;
determining, for each row of byte files of the segment buffer, based on the segment buffer width, the number of fields, and the element size, a skew that is indicative of an amount by which data bytes to be written to the row in the segment buffer is to be rotated;
applying the determined skew to the determined mapping;
receiving data bytes of data retrieved from the one or more processor registers based on the received instructions; and
writing to the segment buffer, based on the received instructions and on the determined mapping with the determined skew applied, each received data byte to a byte file of one of the plurality of data registers of the segment buffer.

6. The method of claim 5, further comprising:
reading data bytes from the plurality of data registers of the segment buffer;
applying the determined skew to the read data bytes; and
writing the read data bytes with the applied skew to the data storage device.

7. The method of claim 6, further comprising aligning the data bytes read from the segment buffer to write to the data storage device contiguously.

8. The method of any preceding claim, wherein determining a skew includes:
determining a repeat according to the following equation: $Repeat = \frac{Element Size \times nfields}{gcd \left(\left(Element Size\times nfields\right),Segment Buffer Width\right)}$ wherein gcd denotes the greatest common divisor function, Element Size denotes the number of data bytes in a data element, nfields denotes the number of fields in each data segment, and Segment Buffer Width denotes the number of data bytes that can be written to a row of byte files of the segment buffer; and
determining the skew according to the following equation: $Skew = Element Size \times mod \left(floor\left(\frac{Index}{Repeat}\right),\frac{nfields}{Repeat}\right)$ wherein mod denotes the modulo function, floor denotes the floor function, and Index denotes a row number in the segment buffer.

9. The method of any preceding claim, wherein:
the processor register is a vector processor register; and/or
each data register includes 2^{x} number of byte files, where x is an integer greater than or equal to 1; and/or
each data byte comprises eight bits of data.

10. An apparatus for a data load operation for writing data to one or more processor registers via a segment buffer, the data comprising a plurality of data segments, each data segment comprising one or more data elements, each data element comprising one or more data bytes, comprising:
logic circuitry configured to receive data bytes of data retrieved from a data storage device based on received instructions, the instructions defining a number of fields in each segment and an element size; and
a segment buffer comprising a plurality of data registers, each data register comprising one or more byte files, the byte files being arranged into one or more rows, the or each row comprising one byte file from each data register and defining a segment buffer width;
wherein the logic circuitry is configured to:
determine, for each row of byte files of the segment buffer, based on the segment buffer width, the number of fields, and the element size, a skew that is indicative of an amount by which data bytes to be written to the row in the segment buffer is to be rotated;
apply the determined skew to the received data bytes for writing to the segment buffer such that data bytes of data elements of the same field are written to respectively different data registers;
write to the segment buffer, row-wise and row-by-row, based on the received instructions and with the applied skew, each received data byte to a byte file of one of the plurality of data registers of the segment buffer;
determine a mapping indicative of, for a byte file in the one or more processor registers, a byte file in the segment buffer from which a data byte in said byte file is to be read and written to said byte file of the one or more processor registers; and
apply the determined skew to the determined mapping.

11. The apparatus of claim 10, wherein the logic circuitry is further configured to:
read, from the plurality of data registers of the segment buffer, the one or more data bytes of data elements of the same field; and
write the read data bytes of the data elements of the same field to the one or more processor registers based on the determined mapping with the determined skew applied.

12. The apparatus of claim 10 or 11, wherein the logic circuitry includes a barrel shifter configured to write the received data bytes with the applied skew to the segment buffer.

13. The apparatus of claim 10 or 11, wherein the logic circuitry includes a cross bar switch configured to write the received data bytes with the applied skew to the segment buffer.

14. The apparatus of claims 11 and 12, wherein the logic circuitry includes a cross bar switch configured to:
write the one or more read data bytes of data elements of the same field to the one or more processor registers based on the determined mapping with the determined skew applied.

15. The apparatus of claims 11 and 13, wherein the cross bar switch is further configured to:
write the one or more read data bytes of data elements of the same field to the one or more processor registers based on the determined mapping with the determined skew applied.

16. The apparatus of any one of claims 10 to 15, wherein the logic circuitry is configured to align the received data bytes to write to the data bytes to the segment buffer contiguously.

17. An apparatus for a data store operation for writing data to a data storage device via a segment buffer, the data comprising a plurality of data segments, each data segment comprising one or more data elements, each data element comprising one or more data bytes, comprising:
logic circuitry configured to receive data bytes of data retrieved from one or more processor registers based on received instructions, the instructions defining a number of fields in each segment and an element size; and
a segment buffer comprising a plurality of data registers, each data register comprising one or more byte files, the byte files being arranged into one or more rows, the or each row comprising one byte file from each data register and defining a segment buffer width;
wherein the logic circuitry is configured to:
determine a mapping indicative of, for a byte file in one or more processor registers from which a data byte in said byte file is to be read and written to the segment buffer, a byte file in the segment buffer to which to write said data byte;
determine, for each row of byte files of the segment buffer, based on the segment buffer width, the number of fields, and the element size, a skew that is indicative of an amount by which data bytes to be written to the row in the segment buffer is to be rotated;
apply the determined skew to the determined mapping; and
write to the segment buffer, based on the received instructions and the determined mapping with the determined skew applied, each received data byte to a byte file of one of the plurality of data registers of the segment buffer.

18. The apparatus of claim 17, wherein the logic circuitry is further configured to:
read data bytes from the plurality of data registers of the segment buffer;
apply the determined skew to the read data bytes; and
write the read data bytes with the applied skew to the data storage device.

19. The apparatus of claim 17 or 18, wherein the logic circuitry includes a cross bar switch, configured to:
receive the data bytes of the retrieved data; and
write the received data bytes to the segment buffer based on the determined mapping with the determined skew applied.

20. The apparatus of claim 18 or 19, wherein the cross bar switch is further configured to:
receive the read data bytes; and
write the read data bytes with the applied skew to the data storage device.

21. The apparatus of claim 18 or 19, wherein the logic circuitry includes a barrel shifter configured to:
receive the read data bytes; and
write the read data bytes with the applied skew to the data storage device.

22. The apparatus of claim 18 and any one of claims 19 to 21, wherein the logic circuitry is configured to align the read data bytes to write the read data bytes to the data storage device contiguously.

23. The apparatus of any one of claims 10 to 22, wherein the logic circuitry is configured to determine the skew by:
determining a repeat according to the following equation: $Repeat = \frac{Element Size \times nfields}{gcd \left(\left(Element Size\times nfields\right),Segment Buffer Width\right)}$ wherein gcd denotes the greatest common divisor function, Element Size denotes the number of data bytes in a data element, nfields denotes the number of fields in each data segment, and Segment Buffer Width denotes the number of data bytes that can be written to a row of byte files of the segment buffer; and
determining the skew according to the following equation: $Skew = Element Size \times mod \left(floor\left(\frac{Index}{Repeat}\right),\frac{nfields}{Repeat}\right)$ wherein mod denotes the modulo function, floor denotes the floor function, and Index denotes a row number in the segment buffer.
